# EUROPÄISCHE PATENTSCHRIFT

(11) **EP 3 462 052 B1**
(45) Veröffentlichungstag und Bekanntmachung des Hinweises auf die Patenterteilung: **27.10.2021**
(21) Anmeldenummer: 18195363.9
(22) Anmeldetag: 19.09.2018
(51) Int. Cl.: F16F 1/12, F16F 1/04, F16F 15/027, F16F 15/06, D06F 37/22

(54) **FEDEREINRICHTUNG ZUR FEDERNDEN LAGERUNG EINER FUNKTIONSEINHEIT EINES ELEKTROGERÄTS UND VERFAHREN ZUR BEEINFLUSSUNG EINER SOLCHEN FEDEREINRICHTUNG**
SPRING DEVICE FOR THE ELASTIC MOUNTING OF A FUNCTIONAL UNIT OF AN ELECTRICAL APPLIANCE AND METHOD FOR INFLUENCING SUCH A SPRING DEVICE
DISPOSITIF À RESSORT DESTINÉ AU MONTAGE ÉLASTIQUE D'UNE UNITÉ FONCTIONNELLE D'UN APPAREIL ÉLECTRIQUE ET PROCÉDÉ DESTINÉ À AGIR SUR UN TEL DISPOSITIF À RESSORT

(30) Priorität: 29.09.2017 DE 102017217416
(43) Veröffentlichungstag der Anmeldung: 03.04.2019
(73) Patentinhaber: E.G.O. Elektro-Gerätebau GmbH, 75038 Oberderdingen (DE)
(72) Erfinder: Schaumann, Uwe, 75038 Oberderdingen (DE); Schmidt, Kay, 75038 Oberderdingen (DE); Seidler, Christian, 75015 Bretten (DE)
(74) Vertreter: Patentanwälte Ruff, Wilhelm, Beier, Dauster & Partner mbB

(56) Entgegenhaltungen:
- EP-A1- 2 778 056
- WO-A1-2008/088197
- WO-A1-2013/113688
- DE-A1- 1 921 502
- DE-U- 1 836 825
- JP-A- S58 155 285
- JP-U- S5 662 450

## Beschreibung

### ANWENDUNGSGEBIET UND STAND DER TECHNIK

Die Erfindung betrifft eine Federeinrichtung zur Federung und/oder zur federnden Lagerung einer Funktionseinheit eines Elektrogeräts, die insbesondere bewegbar bzw. bewegt ist und somit Vibrationen ausgesetzt ist. Insbesondere ist dieses Elektrogerät eine Waschmaschine oder ein Waschtrockner mit einer Waschtrommel, die durch die Federeinrichtung nicht nur hinsichtlich ihrer möglichen Bewegungen gefedert wird, sondern auch an Federn aufgehängt sein kann zur federnden Lagerung. Des Weiteren betrifft die Erfindung ein Verfahren zur Beeinflussung einer solchen Federeinrichtung.

Bei Waschmaschinen üblicher Bauart ist eine Waschtrommel in einer Trommelaufnahme angeordnet und diese federnd aufgehängt, in der Regel an zwei Federn nach oben und zur Seite gespannt sowie an zwei Dämpfern nach unten und zur Seite gespannt. Dies ist beispielsweise bekannt aus der WO 2013/113688 A1. Der Grund dafür ist der, dass bei einer Rotation der Waschtrommel, insbesondere bei hohen Drehzahlen zum Schleudern von darin befindlicher Wäsche, eine Unwucht durch ungleichmäßig verteilte Wäsche vorliegen kann und diese bei hohen Drehzahlen zu extremen Vibrationen und mechanischer Belastung der Waschmaschine führen können. Dafür sind in der Regel die Dämpfer vorgesehen, um eine Bewegung der Waschtrommel zu dämpfen, damit diese nicht zu stark wird. An dieser Trommelaufnahme sind die Federn und die Dämpfer befestigt, ebenso üblicherweise ein Antriebsmotor. Somit ist die federnd gelagerte Masse relativ groß.

Aus der JP S5662450 U ist eine Federeinrichtung in Form einer Gasdruckfeder bekannt. Sie kann universell eingesetzt werden. Daraus ist es bekannt, dass es ein Problem gibt bei konventionellen Gasdruckfedern, wenn die Temperatur abnimmt und damit dann auch die Temperatur des Gases, das in einen Zylinder eingeschlossen ist, abnimmt. Daraufhin nimmt auch das Volumen dieses eingeschlossenen Gases ab, wodurch sich die Feder in ihrer Länge verändern könnte. Hierfür ist ein elektrischer Heizer vorgesehen, um die Gasdruckfeder zu heizen und somit den Temperaturabfall am Gas auszugleichen.

Aus der JP S58155285 A ist eine Formgedächtnislegierung bekannt mit einer Vorrichtung, die als Federeinrichtung dienen könnte. Abhängig davon, ob eine Temperatur unterhalb oder oberhalb einer bestimmten Temperatur liegt, nimmt das Bauteil aus der Formgedächtnislegierung eine erste Form oder eine zweite Form ein. Somit kann mit Hilfe der Feder eine Vorrichtung temperaturabhängig an zwei unterschiedlichen Positionen positioniert werden.

### AUFGABE UND LÖSUNG

Der Erfindung liegt die Aufgabe zugrunde, eine eingangs genannte Federung sowie ein eingangs genanntes Verfahren zur Beeinflussung einer solchen Federeinrichtung zu schaffen, mit denen Probleme des Standes der Technik gelöst werden können und es insbesondere möglich ist, Vibrationen beim Betrieb einer bewegten Funktionseinheit zu reduzieren und mechanische Belastungen sowie Geräuschentwicklung zu minimieren.

Gelöst wird diese Aufgabe durch eine Federeinrichtung mit den Merkmalen des Anspruchs 1 sowie durch ein Verfahren zur Beeinflussung einer solchen Federeinrichtung mit den Merkmalen des Anspruchs 9. Vorteilhafte sowie bevorzugte Ausgestaltungen der Erfindung sind Gegenstand der weiteren Ansprüche und werden im Folgenden näher erläutert. Dabei werden manche Merkmale nur für die Federeinrichtung oder nur für das Verfahren beschrieben. Sie sollen jedoch unabhängig davon sowohl für die Federeinrichtung als auch für das Verfahren selbstständig und unabhängig voneinander gelten können. Der Wortlaut der Ansprüche wird durch ausdrückliche Bezugnahme zum Inhalt der Beschreibung gemacht.

Die Federeinrichtung zur Federung und/oder zur federnden Lagerung der bewegbaren Funktionseinheit des Elektrogerätes weist mindestens ein Federmittel auf sowie Kopplungsmittel, um das Federmittel an die Federeinrichtung zu koppeln. Die Federeinrichtung kann also auch mehrere Federmittel aufweisen, vorteilhaft verteilt an der Funktionseinheit angeordnet.

Es kann vorgesehen sein, dass das Federmittel eine Konstante bzw. Federeigenschaften aufweist, die temperaturabhängig sind und verändert werden können, wenn eine Temperatureinwirkung auf das Federmittel stattfindet. Insbesondere können Federkonstante bzw. Federeigenschaften durch Erwärmung eines Teils des Federmittels oder des gesamten Federmittels verändert werden, vorteilhaft in bestimmbarem bzw. einstellbarem Maß für eine bestimmbare bzw. einstellbare Veränderung der Federkonstante bzw. der Federeigenschaften.

Erfindungsgemäß sind, evtl. zusätzlich oder alternativ zu einer Veränderung der Federmittel, die Kopplungsmittel derart temperaturabhängig ausgebildet, dass sie durch Temperatureinwirkung ihre Kopplungswirkung des Federmittels an die Federeinrichtung verändern.

Durch diese Möglichkeit, evtl. auch durch beide Möglichkeiten gemeinsam, kann also somit eine Verstellung der federnden Lagerung bzw. deren Federkonstante erfolgen. So können vorgenannte Resonanzprobleme vermieden werden.

Für die Veränderung der Federmittel kann vorteilhaft vorgesehen sein, dass diese graduell möglich ist bzw. weitgehend stufenlos. Alternativ kann dies in Stufen oder auch nur zweistufig sein.

Für eine Veränderung der Kopplungswirkung kann vorteilhaft vorgesehen sein, dass diese sozusagen digital verändert werden kann, also entweder eine Kopplungswirkung vorhanden ist, und zwar so, dass die Federmittel vollständig an die Federeinrichtung angekoppelt sind, oder dass überhaupt keine Kopplungswirkung vorgesehen ist, die Federmittel also von der Federeinrichtung abgekoppelt sind.

Für eine solche Veränderung der Federkonstante bzw. Federeigenschaften einerseits und/oder der Kopplungswirkung andererseits sind Heizmittel vorgesehen, die also vorteilhaft das Federmittel und/oder das Kopplungsmittel beheizen oder erwärmen können, wodurch sich die Federkonstante bzw. Federeigenschaften und/oder die Kopplungswirkung verändern. Eine solche Beheizung muss nicht zwingend für das gesamte Federmittel oder die gesamten Kopplungsmittel erfolgen, aber zumindest teilweise. Letztlich ist es dadurch möglich, dass durch eine Feder mehr oder weniger oder durch eine veränderte Feder die Federkonstante bzw. Federeigenschaften insgesamt verändert werden.

Somit ist es möglich, dass eine Federung der Funktionseinheit verändert werden kann derart, dass sich deren Resonanzfrequenz bzw. Eigenfrequenz verändert. Hierfür spielt es eben keine Rolle, ob an mindestens einem Federmittel dessen Federkonstante bzw. Federeigenschaften geändert werden, und an anderen Federmitteln dieser Federeinrichtung eventuell nicht, oder ob ein weiteres Federmittel zusätzlich angekoppelt oder abgekoppelt wird. In jedem Fall erfolgt eine Änderung der Resonanzfrequenz, so dass es möglich ist, nach einem Erkennen des Annäherns an diese Resonanzfrequenz, insbesondere mit beginnenden stärkeren Vibrationen, sozusagen die Resonanzfrequenz zu ändern. Wenn die aktuelle Frequenz die ursprüngliche Resonanzfrequenz passiert hat kann die Veränderung oder Beheizung wieder eingestellt werden bzw. rückgängig gemacht werden. Dies wird nachfolgend noch näher erläutert. Bei dieser Resonanzfrequenz bzw. Eigenfrequenz ist vor allem auch zu berücksichtigen, dass sie variabel bzw. veränderlich ist und von der Restfeuchte, der Menge sowie vor allem der Verteilung von Wäsche innerhalb der Trommel abhängt und sich von Waschgang zu Waschgang ändert. Deswegen können auch keine fest eingestellten Maßnahmen verwendet werden.

Der Vorteil einer Änderung der Federkonstante bzw. Federeigenschaften und/oder der Kopplungswirkung durch Erwärmung bzw. Beheizung, also durch Temperatureinwirkung, liegt darin, dass eine Erwärmung bzw. Beheizung gut steuerbar ist, ggf. noch relativ schnell wirksam ist innerhalb weniger Sekunden. Je nach Auslegung von Federmittel und/oder Kopplungsmittel können im Vergleich zu mechanischen oder elektromechanischen Aktoren, wie Motoren oder Elektromagneten, relativ große Kräfte ausgeübt werden ohne mechanisch aufwändige Vorrichtungen für solche Aktoren, die ausreichend stabil sein müssen.

In Ausgestaltung der Erfindung kann die Federeinrichtung mindestens ein Haupt-Federmittel und mindestens ein Zusatz-Federmittel aufweisen. Die Kopplungsmittel können dann zur Kopplung des Zusatz-Federmittels an die Federeinrichtung ausgebildet sein, also entweder ankoppeln oder abkoppeln. Es gibt dann insgesamt eine Feder mehr oder eine weniger. Die Kopplungsmittel sind dabei derart temperaturabhängig ausgebildet, dass sie durch Temperatureinwirkung ihre Kopplungswirkung des Zusatz-Federmittels an die Federeinrichtung verändern. Das Haupt-Federmittel bleibt also unbeeinflusst. Die Heizmittel sind dabei dazu vorgesehen, die Kopplungsmittel zu erwärmen, um dadurch die Änderung der Kopplungswirkung zu bewirken. Das Haupt-Federmittel und das Zusatz-Federmittel selbst sind dabei bevorzugt ohne Heizmittel zur Veränderung der Federeigenschaften ausgebildet, es wird also nur eine Kopplungswirkung durch Temperatureinwirkung verändert.

In weiterer Ausgestaltung ist es möglich, dass die Kopplungsmittel zumindest teilweise aus Material mit einem sogenannten Memory-Effekt bestehen, vorteilhaft aus einer Metalllegierung, also aus Metall, für eine erhöhte Stabilität und einen besonders gut ausgeprägten und definierten Memory-Effekt. In einem ersten Zustand, der auch als Grundzustand angesehen werden kann, verbinden die Kopplungsmittel das Zusatz-Federmittel eben nicht funktionswirksam mit der Federeinrichtung, so dass das Zusatz-Federmittel funktional von der Federeinrichtung getrennt ist bzw. abgekoppelt ist. Es kann dabei bevorzugt noch an der Federeinrichtung vorgesehen bzw. befestigt sein, wirkt aber nicht als Feder bzw. trägt nichts zur Federkonstante bzw. den Federeigenschaften bei. In einem zweiten Zustand, der als Änderungszustand gesehen werden kann, ist das Zusatz-Federmittel funktionswirksam mit der Federeinrichtung gekoppelt bzw. derart verbunden, dass das Zusatz-Federmittel zur Federkonstante beiträgt bzw. die Federeigenschaften der Federeinrichtung beeinflusst. Durch dieses Ankoppeln oder Hinzukoppeln der Zusatz-Federmittel, in der Regel als eine Art mechanische Parallelschaltung zu sonstigen Federmitteln bzw. auch dem Haupt-Federmittel, trägt das Zusatzfedermittel sozusagen additiv zur Federung bei.

Die erfindungsgemäßen Heizmittel sind dann vorteilhaft dazu ausgebildet, das Teil aus dem Material mit Memory-Effekt zu beheizen. Dies kann direkt erfolgen, indem das Heizmittel direkt an diesem Teil mit Memory-Effekt anliegt oder daran angebracht oder sogar darauf aufgebracht ist. Dies eignet sich besonders gut bei einem Teil aus einer Metalllegierung für den Memory-Effekt, da dann auch eine ausreichende Temperaturbeständigkeit für direkten Kontakt mit den Heizmitteln gegeben ist. Alternativ kann eine Beheizung des Teils mit Memory-Effekt auch berührungslos erfolgen, beispielsweise durch Strahlungswärme mittels einer Strahlungsheizeinrichtung, wodurch Entfernungen von einigen Zentimetern überbrückt werden können. Ebenso ist eine induktive Beheizung möglich, wofür dann das Teil mit Memory-Effekt aber ferromagnetisch und elektrisch leitfähig sein muss.

Die Veränderung des Zustands des Teils mit Memory-Effekt kann entweder so sein, dass die Federeinrichtung hauptsächlich im Grundzustand betrieben wird und dieser nur mit Hilfe der Heizmittel verlassen wird zum Wechsel in den Änderungszustand, um wie vorbeschrieben eine Resonanzfrequenz sozusagen zu überwinden. Wenn diese sicher überwunden ist, die tatsächliche aktuelle Frequenz in einem Zustand ohne das Zusatz-Federmittel also höher wäre als die Resonanzfrequenz, beispielsweise weil eine Waschtrommel mittlerweile so schnell dreht, dass ohne das Zusatz-Federmittel die Resonanzfrequenz überschritten wäre, so kann die Zusatz-Feder also wieder abgekoppelt werden bzw. die Federeinrichtung kann dann wieder in den Grundzustand wechseln. Alternativ kann die Veränderung des Zustands des Teils mit Memory-Effekt so sein, dass die Federeinrichtung hauptsächlich im Änderungszustand betrieben wird und dieser nur mit Hilfe der Heizmittel verlassen wird zum Wechsel in den Grundzustand.

In alternativer grundsätzlicher Ausgestaltung der Erfindung kann das Federmittel eine Metallfeder sein, insbesondere eine Schraubenfeder. Diese Metallfeder selbst kann dann zumindest teilweise aus einer Metalllegierung mit dem temperaturabhängigen Memory-Effekt bestehen. In diesem Fall können mittels der Heizmittel die Federkonstante bzw. die Federeigenschaften eines Federmittels selbst beeinflusst werden. Auch hierfür sind die Heizmittel entsprechend auszubilden. Möglicherweise müssen sie nicht das gesamte Federmittel beheizen, sondern nur den Bereich, der aus der Metalllegierung mit Memory-Effekt besteht. Alternativ kann auch das gesamte Federmittel aus einer solchen Metalllegierung bestehen, aber nur zum Teil beheizt werden, so dass sich dann durch Wärmefluss im Wesentlichen doch das gesamte Federmittel erwärmt. Dabei kann sich beispielsweise aufgrund der Veränderung des Federmittels durch den Memory-Effekt ein Verkürzen oder Verlängern des Federmittels ergeben, was dann entsprechend eine höhere oder eine geringere Federkonstante bzw. härtere oder weichere Federmittel bewirkt, alternativ sozusagen die Federvorspannung als Federeigenschaft ändert.

Vorteilhaft kann hier vorgesehen sein, dass die Federeinrichtung ebenfalls wieder mindestens ein Haupt-Federmittel und mindestens ein Zusatz-Federmittel aufweist. Das Zusatz-Federmittel ist dann dasjenige aus dem Material bzw. einer Metalllegierung mit Memory-Effekt. Durch den Memory-Effekt kann eine Änderung der Federkonstante bzw. der Federeigenschaften des Zusatz-Federmittels derart stark erfolgen, dass es in einem Fall an der Federung sozusagen gar nicht teilnimmt bzw. diese gar nicht verändert, im anderen Fall aber voll beiträgt. In jedem Fall ist dann aber noch das Haupt-Federmittel vorhanden und wirksam. Dabei kann dann beispielsweise bei einer Waschmaschine das Schleudern bei voller vorgegebener Drehzahl nur mit dem Haupt-Federmittel erfolgen, das dann den dort herrschenden Belastungen auch bei Dauerbetrieb für einige Minuten standhält. Die Zusatz-Federmittel müssen dann nur für das vorgenannte Überwinden der Resonanzfrequenz zugeschaltet werden, was üblicherweise nur wenige Sekunden dauert.

In einer nochmals weiteren grundsätzlichen alternativen Ausgestaltung der Erfindung sind das Zusatz-Federmittel und/oder das Haupt-Federmittel eine Luftfeder, die ein Luftvolumen für die Federeigenschaften aufweist. Derartige Luftfedern sind bekannt. Dieses Luftvolumen befindet sich in einer Luftkammer, wie es üblicherweise bei Luftfedern vorgesehen wird. Bei Verwendung einer Luftfeder sollte die Federeinrichtung mindestens eine weitere Feder aus Metall aufweisen, insbesondere als Haupt-Federmittel, da derartige Federmittel aus Metall eine bessere Linearität ihrer Federkonstante aufweisen und robust sind im täglichen bzw. dauerhaften Einsatz. Dies gilt vor allem für den vorgenannten Fall einer Verwendung in einer Waschmaschine. Bei einer Waschmaschine ist die sich drehende Waschtrommel in einer Trommelaufnahme gelagert. Die Funktionseinheit ist also die Trommelaufnahme samt sich drehender Waschtrommel darin. Auch die Federeinrichtung greift dann an der Trommelaufnahme an bzw. hält diese.

Die vorgenannten Heizmittel zur Erwärmung und Änderung der Federeigenschaften bzw. der Federkonstante können dann der genannten Luftkammer und somit dem Luftvolumen zugeordnet sein oder daran angrenzen. Vorteilhaft können die Heizmittel außen an der Luftkammer angeordnet sein, alternativ in der Luftkammer für ein noch direkteres und schnelleres Aufheizen des Luftvolumens in der Luftkammer. Möglich ist es auch, die Heizmittel direkt auf eine Kammerwand der Luftkammer aufzubringen, also entweder auf einer Innenseite oder auf einer Außenseite der Luftkammer bzw. deren Luftkammerwand. In der Luftkammer kann ein längs der Luftkammer bzw. parallel zu ihrer Längsrichtung bewegbarer Kolben angeordnet sein, wie er üblicherweise für Luftfedern vorgesehen ist. Dieser Kolben kann das Luftvolumen abtrennen, wobei das Luftvolumen insbesondere unter sehr großem Druck steht und ein federndes Element bildet. Dies ist bekannt für solche Luftfedern.

In Weiterbildung der Erfindung kann hier alternativ ein Kolben vorgesehen sein, der in der Luftkammer längs der Luftkammer bzw. parallel zu ihrer Längsrichtung bewegbar angeordnet ist. Dieser Kolben kann die Luftkammer in ein erstes Luftvolumen und in ein zweites Luftvolumen trennen, wobei vorteilhaft beide Luftvolumina geschlossen sind und unter hohem Druck stehen, so dass sie beide ein federndes Element bilden. Der Kolben kann dann, wie im Übrigen auch im ersten vorgenannten Fall, mit der Federeinrichtung oder einem Gehäuse verbunden sein und in beiden Bewegungsrichtungen sozusagen federnd gelagert sein. Die beiden Luftvolumina sind dabei jeweils abgeschlossen, und mindestens eines der beiden Luftvolumina ist dabei beheizbar. Hierfür können die Heizmittel verwendet werden, wobei auf die verschiedenen Möglichkeiten zur Anordnung der Heizmittel an der Luftfeder bzw. an der Luftkammer oder in den Luftvolumina auf die vorherigen Ausführungen verwiesen wird.

Mindestens eines der beiden Luftvolumina kann beheizt werden mittels der Heizmittel, um dadurch die Federeigenschaften zu verändern. Um dies für beide Luftvolumina zu machen, können jeweils separate und unabhängig voneinander aktivierbare Heizmittel vorgesehen sein, wie sie vorstehend beschrieben worden sind.

Allgemein kann ein Heizmittel ein Widerstandsheizelement aufweisen, insbesondere als flächiges Heizelement. So kann eine Heizungswirkung für ein Luftvolumen verbessert werden, insbesondere kann ein Luftvolumen schneller erhitzt werden. Ein solches Widerstandsheizelement kann bevorzugt in Schichtbauweise hergestellt werden, besonders bevorzugt als Dickschichtheizelement. Ein solches Dickschichtheizelement kann entweder zuerst auf einen Träger aufgebracht werden und dann dieser an der Luftkammer oder an Kopplungsmitteln angeordnet werden. Alternativ kann es direkt auf eine Wandung der Luftkammer oder an die Kopplungsmittel selbst aufgebracht werden.

Ist ein Teil bei der Federeinrichtung vorgesehen, das einen temperaturabhängigen Memory-Effekt aufweist, insbesondere ein Teil aus einer entsprechenden Metalllegierung, so kann der Memory-Effekt bei Erwärmung gut genutzt werden. Alternativ können die Heizmittel auch mit einem vorgenannten Luftvolumen verbunden werden bzw. wärmeleitend mit diesem verbunden sein oder daran angekoppelt sein.

In vorteilhafter weiterer Ausgestaltung der Erfindung weist die Federeinrichtung eine Dämpfungseinrichtung auf, so dass sich eine Bewegung der Funktionseinheit trotz aller federnden Ausgleichsmöglichkeiten nicht aufschwingen kann bzw. ein Resonanzpunkt vermieden werden kann. An der Funktionseinheit kann zusätzlich auch noch eine Dämpfungseinrichtung vorgesehen sein, insbesondere eine weitere Dämpfungseinrichtung. Diese sorgt auf an sich bekannte Art und Weise für eine Begrenzung einer Bewegung der Funktionseinheit.

Mit der Erfindung ist es also möglich, bei einer bewegbaren Funktionseinheit eines Elektrogeräts, wie insbesondere einer Waschtrommel bzw. einer Trommelaufnahme einer Waschmaschine, die derart federnd gelagert ist, dass sie dabei eine Resonanzfrequenz aufweist, durch Beheizung eines Kopplungsmittels, mit dem ein Federmittel an die Federeinrichtung gekoppelt ist, die Federeigenschaften bzw. Federkonstante der Federeinrichtung zu ändern bzw. eine Resonanzfrequenz zu ändern. Wenn festgestellt wird, dass sich die Funktionseinheit mit ihrer federnden Lagerung einer Resonanzfrequenz nähert, kann durch Einschaltung einer Beheizung, alternativ durch Ausschalten einer Beheizung, diese Resonanzfrequenz sozusagen etwas verschoben werden, so dass die kritische Situation nicht mehr besteht. Vorteilhaft nähert man sich dabei der Resonanzfrequenz von unten her und ändert sie dann aber so, dass sie niedriger ist als die derzeitige Frequenz, so dass sie sozusagen überwunden worden ist ohne den Resonanzfall. Wenn dann die tatsächliche Frequenz über der eigentlichen Resonanzfrequenz liegt, kann eine Aktivierung der Heizung wieder eingestellt werden, so dass die Federeinrichtung wieder in ihrem ursprünglichen Zustand ist.

In Ausgestaltung der Erfindung ist es möglich, dass eine Veränderung der Federeigenschaften und/oder der Kopplungswirkung nicht kontinuierlich erfolgt, sondern in Stufen. Besonders vorteilhaft können insgesamt nur zwei Stufen oder Zustände vorgesehen sein, also entweder keine Veränderung oder eine Veränderung einer genau spezifizierten Art. So kann der Aufwand geringer gehalten werden und gleichzeitig kann sichergestellt sein, dass die aktuelle Frequenz sozusagen schnell übersprungen wird oder ausgelassen wird.

In weiterer Ausgestaltung der Erfindung kann vorgesehen sein, dass eine Veränderung der Federeigenschaften und/oder der Kopplungswirkung nach Vorgabe bei Durchschreiten gewisser Frequenzen oder bestimmter Drehzahlen der Funktionseinheit erfolgt. Dann kann der Aufwand einer Messung der Frequenz oder der Drehzahl geringer gehalten werden. Insbesondere kann beispielsweise eine Drehzahl der Funktionseinheit über Kennwerte eines Antriebsmotors der Funktionseinheit erfasst werden, zumindest ungefähr. Dies reicht für die Zwecke der Erfindung aus, also um zu erkennen, wann man sich einer Resonanzfrequenz nähert. Dann wird eben die Näherungsgrenze entsprechend weiter bestimmt. Gemäß einer anderen Möglichkeit kann ein Motorstrom des Antriebsmotors erfasst werden, was mit einer üblichen Motorsteuerung leicht ist, insbesondere auch bei üblichen Antriebsmotoren für Waschmaschinen. Anhand des Verlaufs des Motorstroms mit einem charakteristischen Bereich können die Resonanzfrequenz bzw. Eigenfrequenz der Funktionseinheit zusammen mit der federnden Lagerung samt Federeinrichtung bzw. das Annähern an und dann das Erreichen dieser Resonanzfrequenz erkannt werden. Dann kann als Gegenmaßnahme die Federeinrichtung verändert werden. Vorteilhaft hierbei ist die einfache Erfassung des Motorstroms, welche ohnehin vorgesehen ist in einer modernen Waschmaschinensteuerung oder sonstigen Steuerung eines Elektrogeräts. Bei einer Annäherung an die Resonanzfrequenz kann ein schneller Anstieg des Motorstroms um etwa 10% erfolgen, also beispielsweise innerhalb von 5 sec.

Eine solche Resonanzfrequenz der Funktionseinheit des Elektrogeräts samt federnder Lagerung oder Federung bzw. die Annäherung daran kann alternativ mittels eines Vibrationssensors oder mittels eines Kraftsensors an der Funktionseinheit erfasst werden. Dies ist eine genaue Möglichkeit zur Erfassung eines Annäherns an die Resonanzfrequenz. Wenn das Erreichen der Resonanzfrequenz bzw. eine Annäherung daran festgestellt wird, beispielsweise an 80% oder vorteilhaft 90% bis 95% der Resonanzfrequenz, kann dann das Ändern der Federeigenschaften und/oder der Kopplungswirkung gewünscht sein. Eine Federkonstante des Federmittels kann dann erhöht werden, beispielsweise um mindestens 5% oder um mindesten 10%. Eine Kopplungswirkung wird bei einer ähnlichen Frequenz kurz vor Erreichen der Resonanzfrequenz nicht graduell erhöht, sondern vorteilhaft sozusagen digital bzw. derart, dass ein Federmittel, welches vorher nicht an die Federeinrichtung angekoppelt war, danach damit verbunden ist. Ein solches Verbinden kann als starres Ankoppeln bzw. starres Verbinden ausgebildet sein.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit. Der Umfang der Erfindung ist durch die beigefügten Ansprüche definiert.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine schematische Darstellung einer Waschmaschine als erfindungsgemäßes Elektrogerät mit einer Federeinrichtung für eine Waschtrommel,
- Fig. 2 bis 4: verschiedene Funktionszustände von Zusatz-Mitteln für eine Federeinrichtung der Waschmaschine aus Fig. 1,
- Fig. 5: eine alternative Ausgestaltung einer durch Erwärmung veränderbaren Feder in Form einer Luftfeder mit zwei Luftkammern,
- Fig. 6: eine Abwandlung der Fig. 5 mit einer Luftfeder, die nur eine Luftkammer aufweist und
- Fig. 7: eine nochmals weitere Abwandlung einer Federeinrichtung ähnlich Fig. 2 mit einer Zusatz-Feder aus einer Memory-Legierung.

### Detaillierte Beschreibung der Ausführungsbeispiele

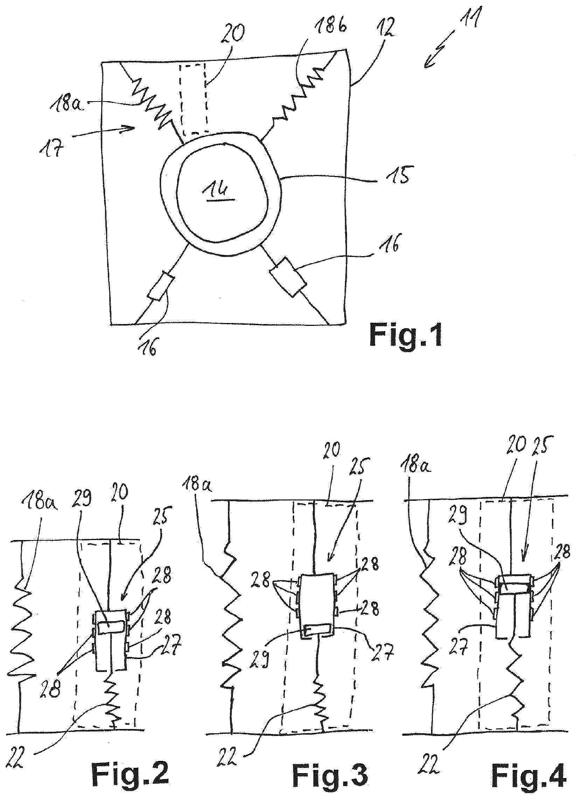

In der Fig. 1 ist vereinfacht eine Waschmaschine 11 dargestellt mit einem Gehäuse 12. Darin ist eine Waschtrommel 14 in einer Waschtrommelhalterung 15 auf an sich bekannte Art und Weise gehaltert, und zwar drehbar. An der Waschtrommelhalterung 15 ist üblicherweise ein hier nicht dargestellter Antriebsmotor angebracht, um die Waschtrommel 14 drehen zu können.

Aufgrund des möglichen Auftretens einer vorgenannten Unwucht beim Drehen der Waschtrommel 14, insbesondere bei hohen Drehzahlen wie beispielsweise beim Schleudern, kann es zu üblichen Schwingungen kommen in der Waschmaschine 11, so dass diese erheblich wackelt. Um dies etwas aufzufangen, ist oben an der Waschtrommelhalterung 15 eine Federeinrichtung 17 vorgesehen. Diese weist zwei Federn 18a und 18b auf, vorteilhaft Schraubenfedern aus Metall. Sie erlauben eine gewisse Bewegung der Waschtrommelhalterung 15. Um die Bewegung oder Vibrationen bzw. Schwingungen nicht zu groß werden zu lassen, sind unten an der Waschtrommelhalterung 15 zwei Dämpfer 16 angeordnet. Diese haben keine Federung zur Aufgabe, sondern sollen lediglich Bewegungen oder starke Vibrationen dämpfen. Dies ist aus dem eingangs genannten Stand der Technik auch bekannt.

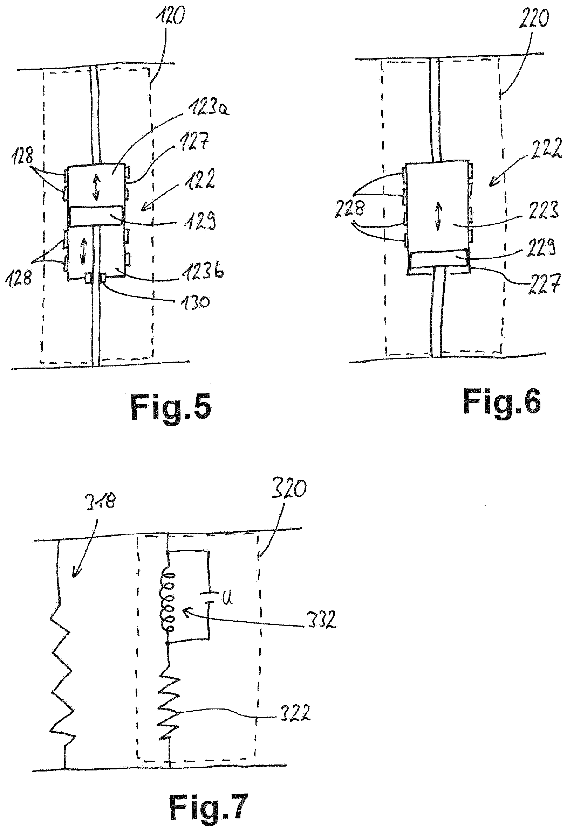

Die Erfindung sieht nun vor, dass die Waschmaschine 11 eine erfindungsgemäße Federeinrichtung 17 aufweist, also noch eine weitere Feder bzw. eine Zusatz-Feder, die zusätzlich zu den Federn 18a und 18b vorgesehen sein können oder diese zumindest teilweise ersetzen können. Diese gestrichelt dargestellten Zusatz-Mittel 20 können gemäß den Fig. 2 bis 4 Kopplungsmittel 25 und eine Zusatz-Feder 22 umfassen. Alternativ ist es nur eine beeinflussbare Zusatz-Feder 122 bzw. 222 gemäß den Fig. 5 und 6. Gemäß einer nochmals weiteren Alternative ist es eine Reihenschaltung aus einer beeinflussbaren weiteren Zusatz-Feder 332 und einer Zusatz-Feder 322 entsprechend Fig. 7.

Bei dem Ausführungsbeispiel der Fig. 2 bis 4 weisen die gestrichelt umrandeten Zusatz-Mittel 20, die sind ähnlich wie in Fig. 1, an einem Ende zur Kopplung nach außen eine Zusatz-Feder 22 auf. Diese Zusatz-Feder 22 ist vorteilhaft gemäß dem Stand der Technik aufgebaut als metallische Schraubenfeder. Sie kann grundsätzlich ähnlich sein wie die Feder 18a oder 18b.

Die Fig. 2 und 3 zeigen dabei einen Grundzustand, da nämlich die Zusatz-Feder 22 nicht wirksam mit der Federeinrichtung gekoppelt ist. Die Fig. 4 zeigt den Änderungszustand, da hier die Zusatz-Feder 22 wirksam angekoppelt ist.

Die Kopplungsmittel 25 sind so ausgebildet, dass die Zusatz-Feder 22 eigentlich nicht aktiv an der Federung beteiligt ist. Deswegen kann hier vorgesehen sein, dass in einem Grundzustand die Kopplungsmittel 25 nicht aktiv sind bzw. der Kolben 29 weitgehend reibungsfrei in dem Zylinder 27 auf- und abbewegt wird bei entsprechender Bewegung der Waschtrommelhalterung 15. Dies ist aus der Fig. 3 zu ersehen.

Außen an dem Zylinder 27 sind Heizelemente 28 angeordnet, vorteilhaft direkt auf eine Außenseite des Zylinders 27 aufgebracht. Bevorzugt sind es eingangs genannte Dickschicht-Heizelemente, die auch direkt auf Metall aufgebracht werden können, wenn auf die Oberfläche zuerst eine Isolierschicht aufgebracht worden ist. Diese Heizelemente 28 können entweder den Zylinder 27 selbst derart beheizen, dass sich dieser so verändert, dass der Kolben 29 darin festgeklemmt ist, beispielsweise weil er eine noch größere Temperaturausdehnung aufweist bei Erwärmung als der Zylinder 27 selbst. Alternativ kann der Zylinder 27 aus einem temperaturinvarianten Material bestehen, beispielsweise Invar. Die dann von den Heizelementen 28 erzeugte Wärme dehnt nur den Kolben 29 auf, der sich dann innen im Zylinder 27 festklemmt, entweder an beliebiger Stelle oder an einer möglichen Einraststelle. Dies ist in Fig. 4 dargestellt, dort ist der Kolben 29 an derselben Stelle wie in Fig. 2 im Zylinder 27 festgeklemmt und somit fixiert durch Erwärmung mit den Heizelementen 28. Nun ist die Zusatz-Feder 22 unten am Kopplungsmittel 25 fest und dauerhaft ein aktiver Teil der Federeinrichtung 17. Die Federkonstante der Federeinrichtung 17 hat sich somit erwartungsgemäß erhöht, und damit auch die Resonanzfrequenz.

Im Betrieb der Waschmaschine 11 kann dies so ablaufen, dass erkannt wird, wenn in der vorherrschenden Konfiguration, also bei Beladung der Waschtrommel 14 mit Wäsche, die Resonanzfrequenz näher kommt. Dies kann entweder bei einer bekannten Resonanzfrequenz erfolgen anhand einer Überwachung der Drehzahl des nicht dargestellten Antriebsmotors, wobei in einer Tabelle hinterlegt sein kann, bei welcher Drehzahl des Antriebsmotors eine Resonanzfrequenz sicher oder sehr wahrscheinlich erreicht wird. Alternativ kann ein nicht dargestellter Vibrationssensor oder Kraftsensor vorgesehen sein, der anhand der Schwingungen oder Bewegungen der Waschtrommelhalterung 15 im Gehäuse 12 erkennt, wann die Resonanzfrequenz bald erreicht ist bzw. wann etwa 90 % oder 95 % der Resonanzfrequenz erreicht sind. Dann steigen die Vibrationen nämlich üblicherweise bereits stark bzw. nichtlinear an. Dann kann durch entsprechende Beeinflussung der Kopplungsmittel 25 die Zusatz-Feder 22 hinzugekoppelt werden. Ist die Resonanzfrequenz sicher überwunden, vorteilhaft mit einer Frequenz von mindestens 10 % oberhalb der vermuteten Resonanzfrequenz oder besser noch etwas höher, so kann die Zusatz-Feder 22 eigentlich wieder weggeschaltet bzw. deaktiviert werden, also abgekoppelt werden. Dann können die Heizelemente 28 abgeschaltet werden, damit sich die Kopplungswirkung löst und durch Abkühlung das Kopplungsmittel 25 der Zylinder 27 den Kolben 29 wieder freigibt für eine freie Bewegung. So müssen die Heizelemente 28 voraussichtlich nur 10 sec oder maximal 20 sec in Betrieb sein, so dass zum einen keine allzu starke Erwärmung erfolgt und zum anderen auch nicht allzu viel Energie verbraucht wird.

Alternativ zu der vorbeschriebenen Möglichkeit zur Bestimmung einer Annäherung an die Resonanzfrequenz kann eben auch auf einfache Weise der Motorstrom erfasst werden bzw. überwacht werden. Aus einem charakteristischen Verlauf kann erkannt werden, wann die Resonanzfrequenz der sich drehenden Waschtrommel 14 samt Waschtrommelhalterung 15 näher kommt. Dann kann die Federeinrichtung 17 entsprechend beeinflusst werden.

Durchläuft die Waschmaschine 11 den Frequenzgang von oben nach unten, könnte also die Resonanzfrequenz bei einem Durchqueren von oben nach unten passiert werden, so kann dasselbe Verfahren wiederholt werden.

Alternativ zu der hier in den Fig. 2 bis 4 gezeigten Ausführung könnte der Kolben 29 nach oben fest angeordnet sein und der Zylinder 27 dazu längs bewegbar sein mit der Feder 22 daran. Die Heizelemente 28 könnten dann am Kolben angeordnet sein und diesen bei Erwärmung dehnen, so dass er sich leichter und direkter im Zylinder 27 festklemmen kann. Dann wäre auch eine elektrische Zuleitung an die unbewegten Heizelemente 28 am unbewegten Kolben 29 leichter möglich.

In der Fig. 5 ist eine alternative Ausgestaltung der Erfindung dargestellt mit gestrichelt umrandeten Zusatz-Mitteln 120, die nur aus einem temperaturabhängigen Federmittel bestehen. Die Zusatz-Feder 122 ist hier als Luftfeder ausgebildet mit zwei Luftkammern 123a und 123b. Diese Luftkammern 123a und 123b sind in einem Zylinder 127 angeordnet, an dessen Außenseite in einem oberen Bereich und einem unteren Bereich jeweils Heizelemente 128 vorgesehen sind. Im Mittelbereich sind keine Heizelemente.

In dem Zylinder 127 ist ein Kolben 129 vertikal bzw. längs bewegbar angeordnet. Während der Zylinder 127 mit seiner Oberseite fest mit dem Gehäuse 12 der Waschmaschine 11 oder einem sonstigen Lager verbunden ist, ist der Kolben 129 fest mit beispielsweise der Waschtrommelhalterung 15 verbunden. Eine Befestigungsstange des Kolbens läuft durch eine Dichtung 130, so dass eben auch die untere Luftkammer 123 luftdicht abgedichtet ist.

Eine solche Luftfeder ist an sich für Waschmaschinen nicht unbedingt gebräuchlich, aber in anderen Bereichen wie der Federung von Fahrwerken, insbesondere bei Fahrrädern oder Motorrädern. Eine Federkonstante der Zusatz-Feder 122 bzw. ihre Federeigenschaften hängen vom Luftdruck in den Luftkammern 123a und 123b ab. Wenn nun die Heizelemente 128 im Heizbetrieb die Luft in den Luftkammern 123a und 123b erwärmen, so steigt dort der Luftdruck. Insgesamt wird also die Federkonstante der Zusatz-Feder 122 größer und härter bzw. die Federkonstante nimmt zu. Dadurch ändern sich auch die Federeigenschaften der gesamten Federeinrichtung der gesamten Waschmaschine, diese gesamte Federkonstante nimmt dann auch zu.

Das Aktivieren der Veränderung der Federeigenschaften der Zusatz-Feder 122 gemäß Fig. 5 erfolgt vorteilhaft wiederum geregelt, wenn in der Waschmaschine 11 beim Betrieb oder beim Schleudern die Resonanzfrequenz näher kommt. Eine Frequenzgrenze sowie eine Erkennung derselben können sein wie zuvor beschrieben.

In der Fig. 6 ist eine nochmals weitere Möglichkeit dargestellt für ein gestrichelt umrandetes Zusatz-Mittel 220 zu einer in Fig. 1 dargestellten Federeinrichtung 17. Dort ist eine Zusatz-Feder 222 wiederum als Luftfeder ausgebildet, allerdings ist in einem Zylinder 227 nur eine einzige Luftkammer 223 vorgesehen. Ein in dem Zylinder 227 längs bewegbarer Kolben 229 drückt bei Bewegung in den Zylinder hinein gegen die komprimierte Luft in der Luftkammer 223, so dass sich eben wieder eine Luftfeder ergibt. Die Federeigenschaften hier sind voraussichtlich schlechter als bei der Zusatz-Feder 122 gemäß Fig. 5, dafür ist der konstruktive Aufbau deutlich einfacher. Es braucht nur eine einzige Luftkammer 223 vorgesehen zu werden und eine Dichtung unterhalb des Kolbens 229 entfällt auch.

Außen an dem Zylinder 227 sind Heizelemente 228 um die Luftkammer 223 vorgesehen. Deren Wirkung ist wie zuvor zu Fig. 5 beschrieben, sie können das Luftvolumen in der Luftkammer 223 erwärmen, dadurch steigt der Luftdruck noch zusätzlich und die Zusatz-Feder 222 wird zumindest bei Druckbelastung sozusagen härter. Auch dies kann helfen, eine Resonanzfrequenz des gesamten Systems der Waschmaschine 11 kurzfristig und gesteuert zu verändern, so dass ein Resonanzpunkt gut überwunden werden kann.

Eine nochmals weitere Ausgestaltung der Erfindung ist in Fig. 7 dargestellt. Neben einer Feder 318 weist eine Federeinrichtung dort noch die gestrichelt umrandeten Zusatz-Mittel 320 auf. Die Zusatz-Mittel 320 bestehen aus einer Zusatz-Feder 322, welche aber vorteilhaft eine normale Schraubenfeder aus Metall ist. Diese ist in Reihe geschaltet mit einer weiteren Zusatz-Feder 332, die aus einer Metalllegierung mit Memory-Effekt besteht, also einen Memory-Effekt aufweist. Dieser ist temperaturabhängig. Die hier dargestellte Variante ist derart ausgebildet, dass die weitere Zusatz-Feder 332 sogar direkt selbst beheizt werden kann durch Stromdurchfluss, wie dargestellt ist. Alternativ können natürlich auch Heizelemente vorgesehen sein wie in den Fig. 2 bis 6 oder auch weitere Heizelemente, wie beispielsweise eine induktive Beheizung außen um die weitere Zusatz-Feder 332 herum. Dies verringert Probleme mit elektrischem Anschluss und Isolation.

Auch bei den Zusatz-Mitteln 320 der Fig. 7 kann vorgesehen sein, durch Beheizen die Federkonstante zu ändern, indem nämlich die weitere Zusatz-Feder 332 aus Memory-Metall durch Beheizung ihre Form ändert und härter oder weicher wird, alternativ länger oder kürzer. Auch dies beeinflusst die Federkonstante der Zusatz-Mittel 320 auf absehbare Art und Weise und somit die Federungseigenschaften der gesamten Federeinrichtung der Waschmaschine. Je nach Ausgestaltung der weiteren Zusatz-Feder 332 könnte hier auch bei den Zusatz-Mitteln 320 auf die Zusatz-Feder 322 verzichtet werden. Eine dann vorgesehene weitere Zusatz-Feder aus Memory-Metall kann dann eben durch Beheizung weicher oder härter und/oder länger oder kürzer gemacht werden. Auch damit kann, wie vorbeschrieben, ein Resonanzpunkt gut überwunden werden.

Grundsätzlich besteht bei der Überwindung des Resonanzpunkts eben die zuvor bereits beschriebene Möglichkeit, entweder keinerlei Aktivierung von Heizelementen vorzunehmen. Ein Grundzustand ist dann eben keine Kopplung von zusätzlichen Federn odgl.. Nur wenn diese benötigt wird, werden auch die Heizelemente benötigt. Wenn diese entsprechend ausgebildet sind, kann eine solche Aktivierung in wenigen Sekunden erfolgen, da die Heizelemente so ausgebildet sein können, dass sie sehr schnell ansprechen und somit sehr schnell ihre Heizwirkung entfalten. Auch die davon beheizten Kopplungsmittel und/oder Federn können sehr schnell reagieren. Alternativ kann bereits bei einem Hochfahren der Drehzahl der Waschtrommel 14 der Waschmaschine 11 ein Beheizen starten, so dass dann, wenn absehbar ist, dass der Resonanzpunkt erreicht und überschritten wird, diese zusätzliche Kopplungswirkung und/oder Federwirkung bereits vorhanden ist. Wenn dann der Resonanzpunkt überwunden ist und bei der aktuellen Drehzahl der Waschtrommel 14 ohne aktivierte Kopplungsmittel und/oder Federmittel die vorherrschende Frequenz mindestens 5 % oder besser mindestens 10 % über der Resonanzfrequenz liegt, können diese deaktiviert werden. Dann kann unter Umständen auf das Vorsehen von aufwändigen Kraft- bzw. Vibrationssensoren verzichtet werden.

## Patentansprüche

1. Federeinrichtung (17) zur Federung oder zur federnden Lagerung einer Funktionseinheit (14, 15) eines Elektrogeräts, insbesondere einer Waschtrommel (14) bzw. einer Trommelaufnahme (15) einer Waschmaschine (11), wobei die Federeinrichtung (17) aufweist:
- mindestens ein Federmittel (18, 22, 122, 222, 318, 322) und
- Kopplungsmittel (25) zur Kopplung des Federmittels (18, 22, 122, 222, 318, 322) an die Federeinrichtung (17),
**dadurch gekennzeichnet, dass**:
- die Kopplungsmittel (25) derart temperaturabhängig ausgebildet sind, dass sie durch Temperatureinwirkung ihre Kopplungswirkung des Federmittels (18, 22, 122, 222, 318, 322) an die Federeinrichtung (17) verändern,
- die Federeinrichtung (17) Heizmittel (28, 128, 228) aufweist für die Kopplungsmittel (25) zu deren Erwärmung und Änderung der Kopplungswirkung.

2. Federeinrichtung nach Anspruch 1, **dadurch gekennzeichnet, dass** die Federeinrichtung (17) mindestens ein Haupt-Federmittel (18, 318) und mindestens ein Zusatz-Federmittel (22, 122, 222, 322) aufweist, wobei die Kopplungsmittel (25) zur Kopplung des Zusatz-Federmittels an die Federeinrichtung (17) ausgebildet sind, wobei die Kopplungsmittel (25) derart temperaturabhängig ausgebildet sind, dass sie durch Temperatureinwirkung ihre Kopplungswirkung des Zusatz-Federmittels (22, 122, 222, 322) an die Federeinrichtung (17) verändern, und wobei die Heizmittel (28, 128, 228) für die Kopplungsmittel vorgesehen sind zu deren Erwärmung und Änderung der Kopplungswirkung, wobei vorzugsweise das Haupt-Federmittel (18, 318) und das Zusatz-Federmittel (22, 122, 222, 322) ohne Heizmittel ausgebildet sind.

3. Federeinrichtung nach Anspruch 2, **dadurch gekennzeichnet, dass** die Kopplungsmittel (25) zumindest teilweise aus einer Metalllegierung mit Memory-Effekt bestehen, wobei die Kopplungsmittel:
- in einem ersten Zustand als Grundzustand das Zusatz-Federmittel (22) nicht funktionswirksam mit der Federeinrichtung (17) koppelnd verbinden bzw. das Zusatz-Federmittel (22) funktional von der Federeinrichtung (17) getrennt ist und
- in einem zweiten Zustand als Änderungszustand das Zusatz-Federmittel (22) funktionswirksam mit der Federeinrichtung (17) koppelnd verbinden bzw. das Zusatz-Federmittel (22) mit der Federeinrichtung (17) verbunden ist.

4. Federeinrichtung nach Anspruch 2 oder 3, **dadurch gekennzeichnet, dass** die Heizmittel (28, 128, 228) ausgebildet sind zur Beheizung des Teils aus der Metalllegierung mit Memory-Effekt mit anschließender Änderung der Kopplungswirkung durch die Erwärmung.

5. Federeinrichtung nach Anspruch 1, **dadurch gekennzeichnet, dass** das Federmittel (18, 22, 122, 222, 318, 322) eine Metallfeder ist, insbesondere eine Schraubenfeder, die zumindest teilweise aus einer Metalllegierung mit temperaturabhängigem Memory-Effekt besteht, wobei vorzugsweise die Heizmittel (28, 128, 228) ausgebildet sind zur Beheizung des Teils aus der Metalllegierung mit Memory-Effekt mit anschließender Änderung der Federkonstante bzw. der Federeigenschaften durch die Beheizung und Erwärmung, wobei insbesondere die Federeinrichtung (17) mindestens ein Haupt-Federmittel (18) und mindestens ein Zusatz-Federmittel (22) aufweist, wobei das Zusatz-Federmittel (22) zumindest teilweise aus der Metalllegierung mit temperaturabhängigem Memory-Effekt besteht.

6. Federeinrichtung nach Anspruch 1, **dadurch gekennzeichnet dass** das Zusatz-Federmittel (122, 222) und/oder das Haupt-Federmittel eine Luftfeder ist mit einem Luftvolumen für die Federeigenschaften, wobei sich das Luftvolumen in einer Luftkammer (123a, 123b, 223) befindet, wobei vorzugsweise die Heizmittel (128, 228) außen an der Luftkammer angeordnet sind zur Beheizung des Luftvolumens, wobei vorzugsweise in der Luftkammer ein längs der Luftkammer bewegbarer Kolben (129, 229) angeordnet ist, der insbesondere das Luftvolumen abtrennt.

7. Federeinrichtung nach Anspruch 6, **dadurch gekennzeichnet, dass**
- in der Luftkammer (123a, 123b) ein längs der Luftkammer bewegbarer Kolben (129) angeordnet ist, der die Luftkammer in ein erstes Luftvolumen (123a) und in ein zweites Luftvolumen (123b) trennt,
- der Kolben (129) zwischen den beiden Luftvolumina (123a, 123b) angeordnet ist,
- die beiden Luftvolumina abgeschlossen sind,
- mindestens eines der beiden Luftvolumina beheizbar ist mittels der Heizmittel (128),
wobei vorzugsweise für beide Luftvolumina (123a, 123b) jeweils separate und unabhängig voneinander aktivierbare Heizmittel (128) vorgesehen sind.

8. Federeinrichtung nach einem der vorhergehenden Ansprüche, **dadurch gekennzeichnet, dass** die Heizmittel (28, 128, 228) ein Widerstandsheizelement aufweisen, insbesondere als flächiges Heizelement bzw. als Dickschichtheizelement, wobei vorzugsweise die Heizmittel direkt mit einem Teil aus der Metalllegierung mit temperaturabhängigem Memory-Effekt nach Anspruch 3 oder 5 oder mit einem Luftvolumen (123a, 123b, 223) nach Anspruch 6 verbunden sind bzw. wärmeleitend daran angekoppelt sind, wobei insbesondere die Federeinrichtung (17) eine Dämpfungseinrichtung aufweist an der bewegten Funktionseinheit.

9. Verfahren zur Beeinflussung einer Federeinrichtung (17) nach einem der vorhergehenden Ansprüche in einem Elektrogerät (11) mit einer bewegbaren Funktionseinheit (14, 15), die mittels der Federeinrichtung (17) federnd gelagert ist, wobei die Funktionseinheit (14, 15) des Elektrogeräts (11) mit der federnden Lagerung eine Resonanzfrequenz aufweist, **dadurch gekennzeichnet, dass** die Kopplungsmittel (25) beheizt werden zur Änderung der Kopplungswirkung des Federmittels (22, 122, 222, 322) an die Federeinrichtung (17).

10. Verfahren nach Anspruch 9, **dadurch gekennzeichnet, dass** eine Veränderung der Kopplungswirkung nicht kontinuierlich sondern in Stufen erfolgt, vorzugsweise mit insgesamt nur zwei Stufen von 0% und 100%.

11. Verfahren nach Anspruch 9 oder 10, **dadurch gekennzeichnet, dass** eine Veränderung der Kopplungswirkung nach Vorgabe bei Durchschreiten gewisser Frequenzen oder Drehzahlen der Funktionseinheit (14, 15) erfolgt.

12. Verfahren nach einem der Ansprüche 9 bis 11, **dadurch gekennzeichnet, dass** die Funktionseinheit (14, 15) des Elektrogeräts (11) eine Resonanzfrequenz aufweist und mittels eines Vibrationssensors oder Kraftsensors an der Funktionseinheit erfasst wird, ob sie sich der Resonanzfrequenz nähert, wobei vorzugsweise bei Erreichen der Resonanzfrequenz oder kurz davor die Kopplungswirkung geändert wird.

13. Verfahren nach einem der Ansprüche 9 bis 12, **dadurch gekennzeichnet, dass** bei Erreichen der Resonanzfrequenz oder kurz davor, vorzugsweise bei Erreichen einer Frequenz von mindestens 80% der Resonanzfrequenz, insbesondere mindestens 95%, die Federeigenschaften derart geändert werden, dass die Federkonstante des Federmittels (22, 122, 222, 322) erhöht wird, vorzugsweise um mindestens 5% erhöht wird.

14. Verfahren nach einem der Ansprüche 9 bis 13, **dadurch gekennzeichnet, dass** bei Erreichen der Resonanzfrequenz oder kurz davor, vorzugsweise bei Erreichen einer Frequenz von mindestens 80% der Resonanzfrequenz, die Kopplungswirkung derart stark erhöht wird, dass das Federmittel (22, 122, 222, 322) vollständig wirksam an die Federeinrichtung (17) angekoppelt ist bzw. damit verbunden ist, insbesondere starr angekoppelt ist und damit verbunden ist.

15. Verfahren nach einem der Ansprüche 9 bis 14, **gekennzeichnet durch** einen Antriebsmotor für die Funktionseinheit (14, 15), wobei ein Motorstrom des Antriebsmotors erfasst wird und anhand des Verlaufs des Motorstroms mit einem charakteristischem Bereich die Resonanzfrequenz der Funktionseinheit bzw. das Erreichen dieser Resonanzfrequenz erkannt wird.

## Claims

1. Spring device (17) for suspending or for spring-mounting a functional unit (14, 15) of an electrical appliance, in particular a laundry drum (14) or a drum holder (15) of a washing machine (11), the spring device (17) comprising:
- at least one spring means (18, 22, 122, 222, 318, 322) and
- coupling means (25) for coupling said spring means (18, 22, 122, 222, 318, 322) to said spring device (17),
**characterized in that**:
- the coupling means (25) are designed in a temperature-dependent manner in such a way that said coupling means vary their coupling effect between said spring means (18, 22, 122, 222, 318, 322) and said spring device (17) by a temperature effect,
- the spring device (17) has heating means (28, 128, 228) for said coupling means (25) for the purpose of warming up and changing the coupling effect thereof.

2. Spring device according to claim 1, **characterized in that** the spring device (17) has at least one main spring means (18, 318) and at least one additional spring means (22, 122, 222, 322), wherein said coupling means (25) are designed for coupling said additional spring means to said spring device (17), wherein said coupling means (25) are designed in a temperature-dependent manner in such a way that they vary their coupling effect of the additional spring means (22, 122, 222, 322) to said spring device (17) by a temperature effect, and wherein said heating means (28, 128, 228) are provided for said coupling means for the purpose of warming up and changing said coupling effect thereof, wherein preferably the main spring means (18, 318) and the additional spring means (22, 122, 222, 322) are designed without heating means.

3. Spring device according to claim 2, **characterized in that** the coupling means (25) are at least partially composed of a metal alloy with a memory effect, wherein:
- in a first state as a basic state, said coupling means connect said additional spring means (22) in a non-functionally effective and coupling manner to said spring device (17) or said additional spring means (22) is functionally disconnected from said spring device (17), and
- in a second state as a state of change, said coupling means connect said additional spring means (22) in a functionally effective and coupling manner to said spring device (17) or said additional spring means (22) is connected to said spring device (17).

4. Spring device according to claim 2 or 3, **characterized in that** the heating means (28, 128, 228) are designed for heating said portion composed of said metal alloy with said memory effect with a subsequent change in said coupling effect due to the warming up.

5. Spring device according to claim 1, **characterized in that** the spring means (18, 22, 122, 222, 318, 322) is a metal spring, in particular a helical spring, which is in a portion at least partially composed of a metal alloy with a temperature-dependent memory effect, wherein preferably the heating means (28, 128, 228) are designed for heating said portion composed of said metal alloy with said memory effect with a subsequent change in said spring constant or said spring properties due to said heating and warming up, wherein in particular the spring device (17) device has at least one main spring means (18) and at least one additional spring means (22), wherein said additional spring means (22) is at least partially composed of said metal alloy with said temperature-dependent memory effect.

6. Spring device according to claim 1, **characterized in that** the additional spring means (122, 222) and/or the main spring means are a pneumatic spring with an air volume for said spring properties, wherein said air volume is located in an air chamber (123a, 123b, 223), wherein preferably the heating means (128, 228) are arranged on an outside on said air chamber for heating said air volume, wherein preferably a piston (129, 229) is arranged in the air chamber, said piston being able to be moved along said air chamber, and in particular said piston is separating off said air volume.

7. Spring device according to claim 6, **characterized in that**
- in the air chamber (123a, 123b) a piston (129) is arranged, said piston being able to be moved along said air chamber, and said piston separating said air chamber into a first air volume (123a) and into a second air volume (123b),
- the piston (129) is arranged between said two air volumes (123a, 123b),
- the two air volumes are closed off,
- at least one of said two air volumes is heatable by means of said heating means (128),
wherein preferably for both air volumes (123a, 123b) separate heating means (128) are provided and can be activated independently of one another.

8. Spring device according to any of the preceding claims, **characterized in that** the heating means (28, 128, 228) have a resistance heating element, in particular in the form of a flat heating element or a thick-layer heating element, wherein preferably the heating means are directly connected or coupled in a heat conducting manner to a portion composed of a metal alloy with a temperature-dependent memory effect according to claim 3 or 5, or to an air volume (123a, 123b, 223) according to claim 6, wherein in particular the spring device (17) has a damping device on the moved functional unit.

9. Method for influencing a spring device (17) according to any of the preceding claims in an electrical appliance (11) having a movable functional unit (14, 15) which is springmounted by means of said spring device (17), wherein said functional unit (14, 15) of said electrical appliance (11) comprising said spring-mounting arrangement has a resonant frequency, **characterized in that** the coupling means (25) are heated for changing a coupling effect between said spring means (22, 122, 222, 322) and said spring device (17).

10. Method according to claim 9, **characterized in that** varying said coupling effect is not performed continuously but rather in steps, preferably with a total of only two steps of 0% and 100%.

11. Method according to claim 9 or 10, **characterized in that** varying said coupling effect is performed in accordance with prespecifications when certain frequencies or rotation speeds of said functional unit (14, 15) are crossed.

12. Method according to any of claims 9 to 11, **characterized in that** said functional unit (14, 15) of said electrical appliance (11) has a resonant frequency, and wherein detection in respect of whether it is approaching said resonant frequency is performed by means of a vibration sensor or a force sensor on said functional unit, wherein preferably said coupling effect is changed when said resonant frequency is reached or shortly before said point.

13. Method according to any of claims 9 to 12, **characterized in that**, when said resonant frequency is reached or shortly before said point, preferably when a frequency has reached at least 80% of said resonant frequency, in particular at least 95%, said spring properties are changed in such a way that said spring constant of said spring means (22, 122, 222, 322) is increased, preferably is increased by at least 5%.

14. Method according to any of claims 9 to 13, **characterized in that**, when said resonant frequency is reached or shortly before said point, preferably when a frequency has reached at least 80% of said resonant frequency, the coupling effect is greatly increased in such a way that said spring means (22, 122, 222, 322) is fully effectively coupled to said spring device (17) or connected to said spring device (17), in particular is rigidly coupled and connected to said spring device.

15. Method according to any of claims 9 to 14, **characterized by** a drive motor for said functional unit (14, 15) provided, wherein a motor current of said drive motor is detected and said resonant frequency of said functional unit or said situation of said resonant frequency being reached is identified on a basis of a profile of said motor current with a characteristic range.

## Revendications

1. Dispositif à ressort (17) destiné à suspendre ou à montage élastique d'une unité fonctionnelle (14, 15) d'un appareil électrique, en particulier un tambour de lavage (14) ou bien un logement de tambour (15) d'une machine à laver (11), le dispositif à ressort (17) comprenant :
- au moins un moyen de ressort (18, 22, 122, 222, 318, 322) et
- moyens de couplage (25) pour coupler le moyen de ressort (18, 22, 122, 222, 318, 322) au dispositif à ressort (17),
**caractérisé en ce que**
- les moyens de couplage (25) sont configurés thermo-dépendants de telle manière que par effet de la température lesdits moyens de couplage modifient leur action de couplage du moyen de ressort (18, 22, 122, 222, 318, 322) au dispositif à ressort (17),
- le dispositif à ressort (17) présente moyens de chauffage (28, 128, 228) pour les moyens de couplage (25) pour leur chauffage et variation de l'action de couplage.

2. Dispositif à ressort selon la revendication 1, **caractérisé en ce que** le dispositif à ressort (17) présente au moins un moyen de ressort principal (18, 318) et au moins un moyen de ressort supplémentaire (22, 122, 222, 322), dans lequel les moyens de couplage (25) sont configurés pour coupler le moyen de ressort supplémentaire au dispositif à ressort (17), dans lequel les moyens de couplage (25) sont configurés thermo-dépendants de telle manière que par effet de la température lesdits moyens de couplage modifient leur action de couplage du moyen de ressort supplémentaire (22, 122, 222, 322) au dispositif à ressort (17), et dans lequel les moyens de chauffage (28, 128, 228) pour les moyens de couplage sont prévus pour leur chauffage et variation de l'action de couplage, dans lequel de préférence le moyen de ressort principal (18, 318) et le moyen de ressort supplémentaire (22, 122, 222, 322) sont formés sans moyens de chauffage.

3. Dispositif à ressort selon la revendication 2, **caractérisé en ce que** les moyens de couplage (25) sont composés au moins partiellement d'un alliage de métal à effet mémoire, dans lequel les moyens de couplage :
- dans un premier état en tant qu'état de base n'accouplent pas le moyen de ressort supplémentaire (22) au dispositif à ressort (17) fonctionnellement efficace ou bien le moyen de ressort supplémentaire (22) est déconnecté fonctionnellement du dispositif à ressort (17) et
- dans un deuxième état en tant qu'état de variation accouplent le moyen de ressort supplémentaire (22) au dispositif à ressort (17) fonctionnellement efficace ou bien le moyen de ressort supplémentaire (22) est connecté au dispositif à ressort (17).

4. Dispositif à ressort selon la revendication 2 ou 3, **caractérisé en ce que** les moyens de chauffage (28, 128, 228) sont configurés pour chauffer la partie en alliage de métal à effet mémoire et ultérieurement variation de l'action de couplage par réchauffement.

5. Dispositif à ressort selon la revendication 1, **caractérisé en ce que** le moyen de ressort (18, 22, 122, 222, 318, 322) est un ressort métallique, en particulier un ressort hélicoïdal, composé au moins partiellement d'un alliage de métal à effet mémoire thermo-dépendant, dans lequel de préférence les moyens de chauffage (28, 128, 228) sont configurés pour chauffer la partie en alliage de métal à effet mémoire et ultérieurement variation de la constante de raideur ou bien des propriétés de ressort par le chauffage et réchauffement, dans lequel en particulier le dispositif à ressort (17) présente au moins un moyen de ressort principal (18) et au moins un moyen de ressort supplémentaire (22), dans lequel le moyen de ressort supplémentaire (22) est composé au moins partiellement de l'alliage de métal à effet mémoire thermo-dépendant.

6. Dispositif à ressort selon la revendication 1, **caractérisé en ce que** le moyen de ressort supplémentaire (122, 222) et/ou le moyen de ressort principal est un ressort pneumatique avec un volume d'air pour des propriétés de ressort, dans lequel le volume d'air se trouve dans une chambre d'air (123a, 123b, 223), dans lequel de préférence les moyens de chauffage (128, 228) sont disposés à l'extérieur de la chambre d'air pour chauffer le volume d'air, dans lequel de préférence dans la chambre d'air est disposé un piston (129, 229) mobile le long de la chambre d'air, en particulier ledit piston séparant le volume d'air.

7. Dispositif à ressort selon la revendication 6, **caractérisé en ce que**
- dans la chambre d'air (123a, 123b) est disposé un piston (129) mobile le long de la chambre d'air, ledit piston séparant la chambre d'air en un premier volume d'air (123a) et un deuxième volume d'air (123b),
- le piston (129) est disposé entre les deux volumes d'air (123a, 123b),
- les deux volumes d'air sont fermés,
- au moins l'un des deux volumes d'air est réchauffable par les moyens de chauffage (128),
dans lequel de préférence pour les deux volumes d'air (123a, 123b) respectivement des moyens de chauffage (128) particuliers et activables indépendamment l'un de l'autre sont prévus.

8. Dispositif à ressort selon l'une quelconque des revendications précédentes, **caractérisé en ce que** les moyens de chauffage (28, 128, 228) présentent un élément de chauffage résistif, en particulier un élément de chauffage planaire ou bien un élément de chauffage à couche épaisse, dans lequel de préférence les moyens de chauffage sont connectés directement à une partie en alliage de métal à effet mémoire thermo-dépendant selon la revendication 3 ou 5, ou à un volume d'air (123a, 123b, 223) selon la revendication 6, ou bien couplé de manière conduisant la chaleur, dans lequel en particulier le dispositif à ressort (17) présente un dispositif d'amortissement sur ladite unité fonctionnelle agitée.

9. Procédé destiné à agir sur un dispositif à ressort (17) selon l'une quelconque des revendications précédentes dans un appareil électrique (11) avec une unité fonctionnelle (14, 15) mobile, l'unité à montage élastique par le dispositif à ressort (17), dans lequel l'unité fonctionnelle (14, 15) de l'appareil électrique (11) à montage élastique présente une fréquence de résonance, **caractérisé en ce que** les moyens de couplage (25) sont chauffés pour une variation de l'action de couplage du moyen de ressort (22, 122, 222, 322) au dispositif à ressort (17).

10. Procédé selon la revendication 9, **caractérisé en ce qu'**une modification de l'action de couplage n'a pas lieu continuellement mais par étapes, de préférence avec en tout ne plus que deux étapes de 0 % et 100 %.

11. Procédé selon la revendication 9 ou 10, **caractérisé en ce que** qu'une modification de l'action de couplage a lieu dans une logique de passage de certains fréquences ou vitesses de rotation de l'unité fonctionnelle (14, 15).

12. Procédé selon l'une quelconque des revendications 9 à 11, **caractérisé en ce que** l'unité fonctionnelle (14, 15) de l'appareil électrique (11) présente une fréquence de résonance et détection par un capteur de vibration ou un capteur de force sur l'unité fonctionnelle, si l'unité s'approche à la fréquence de résonance, dans lequel de préférence une variation de l'action de couplage a lieu lorsque la fréquence de résonance est atteinte ou peu avant.

13. Procédé selon l'une quelconque des revendications 9 à 12, **caractérisé en ce que**, lorsque la fréquence de résonance est atteinte ou peu avant, de préférence lorsqu'une fréquence d'au moins 80 % de la fréquence de résonance, en particulier au moins 95 %, est atteinte, les propriétés de ressort sont modifiées de telle manière que la constante de raideur du moyen de ressort (22, 122, 222, 322) soit augmentée, de préférence augmentée par au moins 5 %.

14. Procédé selon l'une quelconque des revendications 9 à 13, **caractérisé en ce que**, lorsque la fréquence de résonance est atteinte ou peu avant, de préférence lorsqu'une fréquence d'au moins 80 % de la fréquence de résonance est atteinte, l'action de couplage est augmentée tellement fort que le moyen de ressort (22, 122, 222, 322) soit couplé au dispositif à ressort (17) ou bien connecté audit dispositif parfaitement efficace, en particulier rigidement couplé et connecté au dispositif à ressort.

15. Procédé selon l'une quelconque des revendications 9 à 14, **caractérisé par** un moteur d'entraînement pour l'unité fonctionnelle (14, 15), dans lequel un courant de moteur du moteur d'entraînement est détecté et la fréquence de résonance de l'unité fonctionnelle ou bien que cette fréquence de résonance est atteinte soit identifiée à l'aide du cours du courant de moteur avec une zone caractéristique.
